# EUROPEAN PATENT APPLICATION

(11) **EP 4 485 658 A1**
(43) Date of publication of application: **01.01.2025**
(21) Application number: 22945361.8
(22) Date of filing: 10.06.2022
(51) Int. Cl.: H01M 50/30, H01M 50/533

(54) **BATTERY CELL, BATTERY, AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); XING, Chengyou, Ningde, Fujian 352100 (CN); LI, Quankun, Ningde, Fujian 352100 (CN); ZHUO, Weirong, Ningde, Fujian 352100 (CN); WANG, Peng, Ningde, Fujian 352100 (CN); JIN, Haizu, Ningde, Fujian 352100 (CN)
(74) Representative: Jacob, Reuben Ellis
(86) International application number: PCT/CN2022/098264
(87) International publication number: WO 2023/236220

(57) **Abstract**

Embodiments of the present application provide a battery cell, a battery, and an electric device. The battery cell comprises: a housing, provided with a first wall; a pressure relief mechanism, provided on the first wall; and an electrode assembly, provided in the housing, the electrode assembly comprising a tab, and the tab comprising a relief portion. In the thickness direction of the first wall, the projection of the pressure relief mechanism on the electrode assembly at least partially falls into the relief portion. The battery cell has high safety.

## Description

### Technical Field

The present disclosure relates to the technical field of batteries, in particular to a battery cell, battery, and electrical device.

### Background Art

Energy conservation and emission reduction are the keys to the sustainable development of the automotive industry, and electric vehicles, due to their advantages in energy efficiency, have become an important component of sustainable development in the automotive industry. For electric vehicles, battery technology is another crucial factor that affects their development.

In the development of battery technology, in addition to increasing the energy density of batteries, safety is also an issue that cannot be ignored. Hence, how to improve the safety of batteries is a pressing technical issue in battery technology.

### Summary

The objective of the present disclosure is to provide a battery cell, battery, and electrical device, wherein the battery cell has relatively high safety.

The present disclosure is realized by the following technical solutions.

In the first aspect, the present disclosure provides a battery cell, comprising a casing, having a first wall; a pressure relief mechanism, arranged on the first wall; and an electrode assembly, arranged inside the casing. The electrode assembly comprises an electrode tab, and the electrode tab comprises an avoidance portion. Along a thickness direction of the first wall, the projection of the pressure relief mechanism on the electrode assembly at least partially falls within the avoidance portion.

In the battery cell according to the embodiments of the present disclosure, the electrode tab is provided with an avoidance portion. The avoidance portion can either be a recessed region of the electrode tab or a region of the electrode tab with a locally lower height, thus enabling the avoidance portion to have a deflecting function. Since the projection of the pressure relief mechanism on the electrode assembly at least partially falls within the avoidance portion, in the case of thermal runaway in the battery cell, the avoidance portion can reduce the risk of the electrode tab obstructing or blocking the pressure relief mechanism, thereby facilitating the release of pressure by the pressure relief mechanism and enhancing the safety of the battery cell.

According to some embodiments of the present disclosure, along the thickness direction, the projection of the pressure relief mechanism on the electrode assembly falls entirely within the avoidance portion, and the area of the avoidance portion is greater than or equal to the area of the pressure relief mechanism.

In the above solution, the projection of the pressure relief mechanism on the electrode assembly falls entirely within the avoidance portion, and the area of the avoidance portion is greater than or equal to the area of the pressure relief mechanism. Therefore, it is effective in reducing the risk of the electrode tab obstructing the pressure relief mechanism during thermal runaway of the battery cell, thus ensuring pressure relief by the pressure relief mechanism timely at the proper time.

According to some embodiments of the present disclosure, the electrode assembly is provided with a central hole, and the avoidance portion is communicated with the central hole.

In the aforementioned solution, the arrangement of the central hole facilitates the molding of the electrode assembly, facilitates the discharge of gas, and also facilitates the electrolyte to infiltrate the electrode assembly; the avoidance portion is communicated with the central hole, so when the battery cell experiences thermal runaway, the gas inside the battery cell can flow from the central hole towards the avoidance portion, and then be discharged from the pressure relief mechanism, thereby enhancing the smoothness of gas flow inside the battery cell.

According to some embodiments of the present disclosure, the avoidance portion comprises a first edge and a second edge. The first edge extends along the first direction from the hole wall of the central hole, while the second edge extends along the second direction from the hole wall of the central hole. The distance between the first edge and the second edge gradually increases from one end near the axis of the central hole to the other end away from the axis of the central hole.

In the above solution, the distance between the first edge and the second edge gradually increases from one end near the axis of the central hole to the other end away from the axis of the central hole, thus facilitating a smooth flow of gas from the central hole of the electrode assembly towards the avoidance portion and enabling the discharge of gas from the pressure relief mechanism at the proper time.

According to some embodiments of the present disclosure, both the first edge and the second edge extend to the outer edge of the electrode tab.

In the above solution, both the first edge and the second edge extend to the outer edge of the electrode tab, allowing the avoidance portion to communicate the central hole and the outer edge of the electrode tab. Therefore, a channel for the gas flow is formed at the avoidance portion of the electrode tab, which enables the smooth flow of gas from the internal gas of the battery cell toward the pressure relief mechanism.

According to some embodiments of the present disclosure, the avoidance portion also comprises a third edge. One end of the first edge, away from the axis of the central hole, is connected to one end of the second edge, away from the axis of the central hole, through the third edge. The third edge forms an arched shape in the direction away from the axis of the central hole.

In the above solution, the third edge connects the first edge and the second edge, which helps constrain the flow path of gas within the avoidance portion. This arrangement ensures that when the battery cell experiences thermal runaway, the internal gas of the battery cell flows through the avoidance portion toward the pressure relief mechanism.

According to some embodiments of the present disclosure, the third edge is tangent to both the first edge and the second edge.

In the above solution, the third edge is tangent to both the first edge and the second edge, thus facilitating a smooth transition between the first edge and the second edge with the third edge. This reduces resistance when gas flows within the avoidance portion, thereby ensuring smooth gas flow.

According to some embodiments of the present disclosure, the angle between the first edge and the second edge is α, satisfying 10°≤ α ≤ 70°, preferably, 200≤α≤60°, preferably, 30°≤α≤50°.

In the above solution, having the angle between the first edge and the second edge within the specified range serves two purposes. Firstly, it increases the area of the avoidance portion, thereby reducing the risk of the pressure relief mechanism being obstructed by the electrode tabs. Secondly, it facilitates the flow of gas from the central hole towards the pressure relief mechanism, thereby improving the smoothness of gas flow.

According to some embodiments of the present disclosure, the electrode tab is connected to the first wall.

In the above solution, connecting the electrode tab to the first wall reduces the need for additional connecting components, thus increasing the spatial efficiency of the electrode assembly and allowing the battery cell to have a higher energy density.

According to some embodiments of the present disclosure, the first wall comprises a connection region, wherein the connection region forms a protrusion on the side of the first wall facing the electrode assembly, and the protrusion is connected to the electrode tab.

In the above solution, connecting the protrusion to the electrode tab allows for the fixation of the electrode assembly, thus reducing the risk of the electrode assembly moving within the casing.

According to some embodiments of the present disclosure, the connection region forms a recess on the side of the first wall that is away from the electrode assembly.

In the above solution, having the connection region form a recess on the side of the first wall away from the electrode assembly facilitates the molding of the connection region and reduces the weight of the casing.

According to some embodiments of the present disclosure, the electrode tab is of a flattened structure.

In the above solution, the electrode tab is of a flattened structure, which allows multiple electrode tabs to come into contact with each other, providing better current collection. Additionally, after flattening, the electrode tabs are in the same plane, which facilitates the connection between the electrode tabs and the first wall.

According to some embodiments of the present disclosure, the casing comprises a shell and a cover, wherein the shell is provided with an opening, the cover seals the opening, and the cover is the first wall.

In the above scheme, the shell is provided with an opening, wherein the cover is sealed by the cover, with the cover serving as the first wall. This configuration facilitates the placement of the pressure relief mechanism.

In the second aspect, the present disclosure provides a battery comprising a casing and multiple battery cells as provided in the embodiments above, with multiple such battery cells being placed inside the box.

In the third aspect, the present disclosure provides an electrical device comprising battery cells as provided in the embodiments above.

The additional aspects and advantages of the present disclosure will be partially disclosed in the following description, while some may become evident from the description or be understood through practical implementation of the present disclosure.

### Brief Description of Drawings

To provide a clearer understanding of the technical solution of the embodiments of the present disclosure, the following brief introduction of the drawings in the embodiments of the present disclosure will be presented. It is evident that the described drawings below are merely some embodiments of the present disclosure. Those skilled in the art can obtain additional drawings based on the described drawings without the need for inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is an exploded view of the battery cell provided in some embodiments of the present disclosure;
FIG. 4 is a top view of the battery cell provided in some embodiments of the present disclosure;
FIG. 5 shows a sectional view of FIG. 4 in the A-A direction;
FIG. 6 is a top view of a battery cell provided in some other embodiments of the present disclosure;
FIG. 7 is a top view of the battery cell provided in some other embodiments of the present disclosure;
FIG. 8 is a top view of the battery cell provided in some other embodiments of the present disclosure;
FIG. 9 is a three-dimensional view of an electrode assembly provided in some embodiments of the present disclosure;
FIG. 10 is a three-dimensional view of the electrode assembly provided in some other embodiments of the present disclosure;
FIG. 11 shows a top view of the electrode assembly in some embodiments of the present disclosure; and
FIG. 12 is a top view of the electrode assembly provided in some other embodiments of the present disclosure.

In the drawings, the drawings are not drawn to actual scale.

Reference numerals: 100-battery; 10-box; 11-first portion; 12-second portion; 20-battery cell; 21-casing; 211-shell; 212-cover; 213-first wall; 2131-connection region; 2132-injection hole; 22-electrode assembly; 221-electrode tab; 2211-avoidance portion; 2211a-first edge; 2211b-second edge; 2211c-third edge; 222-main body; 2221-first end face; 223-central hole; 23-pressure relief mechanism; 200-controller; 300-motor; 1000-vehicle.

### Detailed Description of Embodiments

In order to make the objective, technical solutions, and advantages of the embodiments of the present disclosure clearer, the following description will provide a clear and comprehensive explanation of the technical solutions in the embodiments of the present disclosure with reference to the drawings. Clearly, the described embodiments are part of the embodiments of the present disclosure and not the entire embodiments. The components of embodiments of the present disclosure which are generally described and illustrated in the drawings herein can be arranged and designed in a variety of different configurations.

Unless otherwise defined, all technical and scientific terms used herein have the same meaning as understood by those skilled in the art of the relevant technical field. The terms used herein are used for the purpose of describing specific embodiments and are not intended to limit the present disclosure. The terms "comprising" and "providing" and their variations, as well as any other variations, are intended to cover non-exclusive inclusion in the specification and the claims of the present disclosure, as well as in the accompanying drawings.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features. In the description of the embodiments of the present disclosure, "plurality" means at least two, such as two, three, etc., unless otherwise expressly and specifically limited.

The term "embodiment" used herein means that specific features, structures, or characteristics described in conjunction with the embodiment can be comprised in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the description of the embodiments of the present disclosure, the term "multiple" refers to two or more (including two).

Additionally, in the description of the embodiments of the present disclosure, technical terms such as "center", "longitudinal", "lateral", "length", "width", "thickness", "up", "down", "front", "back", "left", "right", "vertical", "horizontal", "top", "bottom", "inner", "outer", "clockwise", "counterclockwise", "axial", "radial", "circumferential", etc., indicating orientations or positional relationships, are based on the orientations or positional relationships shown in the drawings. These terms are used for the purpose of facilitating the description of the embodiments of the present disclosure and simplifying the description, and should not be construed as indicating or implying that the devices or components referred to must have specific orientations or be constructed and operated in specific orientations. Therefore, they should not be understood as limiting the embodiments of the present disclosure.

In the description of the embodiments of the present disclosure, unless otherwise expressly specified and limited, technical terms such as "arrange", "provide", "connect", "communicate", "fix", and similar terms should be broadly interpreted. For example, they can refer to fixed connections, detachable connections, or integral connections. They can also refer to mechanical connections, electrical connections, or signal connections. The connections can be direct or indirect through intermediate media. Furthermore, the terms can refer to internal connections within two components or the interaction between two components. Those of ordinary skill in the art can understand the meanings of the above terms in the embodiments of the present disclosure according to specific situations.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the battery cell can comprise various types of batteries such as lithium-ion secondary batteries, lithium-ion primary batteries, lithium-sulfur batteries, sodium-ion batteries, sodium-ion batteries, magnesium-ion batteries, etc. The battery cell is cylindrical in shape.

The batteries mentioned in the embodiments of the present disclosure refer to a single physical module that comprises multiple battery cells to provide higher voltage and capacity. For example, the batteries mentioned in the present disclosure can comprise battery modules and so on. The multiple battery cells can be connected in series, parallel, or hybrid to form a battery directly. "Hybrid" herein means that within multiple battery cells, there are both series and parallel connections. The multiple battery cells can also be initially connected in series, parallel, or hybrid to form a battery cell group. The multiple battery cell groups can then be connected in series, parallel, or hybrid to form a battery. The batteries comprise a box that is configured to encapsulate one or multiple battery cells. The box helps to prevent liquids or other foreign substances from affecting the charging or discharging of the battery cells.

A battery cell comprises an electrode assembly and an electrolyte. The electrode assembly is composed of a positive electrode sheet, a negative electrode sheet, and a separator. The operation of the battery cell relies on the movement of metal ions between the positive electrode sheet and the negative electrode sheet. The positive electrode sheet comprises a positive current collector and a positive active material layer. The positive active material layer is coated on the surface of the positive current collector; the uncoated portion of the positive current collector protrudes from the coated positive active material layer; and the uncoated portion of the positive current collector serves as the positive electrode tab. In the case of lithium-ion batteries, the material for the positive current collector can be aluminum, and the positive active material can be lithium cobalt oxide, lithium iron phosphate, lithium manganese oxide, lithium nickel cobalt manganese oxide, and so on. The negative electrode sheet comprises a negative current collector and a negative active material layer. The negative active material layer is coated on the surface of the negative current collector; the uncoated portion of the negative current collector protrudes from the coated negative active material layer; and the uncoated portion of the negative current collector serves as the negative electrode tab. The material of the negative current collector can be copper, and the active material of the negative electrode can be carbon or silicon, and so on. To ensure that there is no fuse blow during high current flow, multiple positive electrode tabs are stacked together, as well as multiple negative electrode tabs are stacked together. The material of the separator can be PP (polypropylene), PE (polyethylene), and so on. In the present disclosure, the electrode assembly can have a wound structure or a stacked structure.

The development of battery technology needs to consider multiple design factors simultaneously, such as energy density, cycle life, discharge capacity, charge-discharge rates, and other performance parameters. Additionally, the safety of the battery also needs to be taken into consideration.

The pressure relief mechanism is a component or device within the battery cell that is actuated when the internal pressure or temperature of the battery cell reaches a threshold, releasing internal pressure or temperature. The pressure relief mechanism can take the form of devices such as explosion-proof valves, gas valves, pressure relief valves, or safety valves, and it can specifically use pressure-sensitive or temperature-sensitive elements or structures. In other words, when the internal pressure or temperature of the battery cell reaches a predetermined threshold, the pressure relief mechanism activates, or a weakened structure within the pressure relief mechanism is damaged, thus creating an opening or passage for the release of internal pressure or temperature.

In the present disclosure, the term "actuate" refers to the pressure relief mechanism undergoing an action or being activated to a certain state, thereby allowing the release of internal pressure or temperature within the battery cell. The actions produced by the pressure relief mechanism can comprise but are not limited to at least a portion of the pressure relief mechanism breaking, shattering, tearing, opening, and so on. In this way it is possible to depressurize or de-pressurize the battery cell under controlled pressure or temperature, thus avoiding potentially more serious accidents.

The pressure relief mechanism on the battery cell has a significant impact on the safety of the battery. For example, when phenomena such as short circuits or overcharging occur, it can lead to thermal runaway within the battery cell, causing a rapid increase in pressure or temperature. In such situations, actuation through the pressure relief mechanism can release internal pressure and temperature outward, thus preventing the battery cell from exploding or catching fire.

In existing technology, even with the arrangement of the pressure relief mechanism, the battery cells can still be prone to explosions and fires. The inventors, through their research, have discovered that the cause of the above-mentioned problem is as follows. When the battery cell experiences thermal runaway, the pressure relief mechanism is actuated, and the battery cell vents. During venting, the electrode tabs are prone to deformation (for example, transitioning from a flattened state to an upright state), thus obstructing the pressure relief mechanism and blocking the venting ports of the battery cell. This prevents the release of internal pressure, leading to the explosion or ignition of the battery cell.

In light of this issue where the deformation of electrode tabs during thermal runaway obstructs the pressure relief mechanism and results in poor safety of the battery cell, the inventors conducted in-depth research for designing a battery cell, wherein the electrode tab comprises an avoidance portion. The avoidance portion serves to deflect and reduce the risk of electrode tabs obstructing the pressure relief mechanism when the battery cell undergoes thermal runaway. This design enhances the safety of the battery cell.

In such a battery cell, the avoidance portion can be a recessed region of the electrode tabs, or alternatively, the avoidance portion can be a region of the electrode tabs with a locally lower height. Because the projection of the pressure relief mechanism on the electrode assembly partially falls within the avoidance portion, there is a significant overlap region between the pressure relief mechanism and the avoidance portion. During thermal runaway of the battery cell, the avoidance portion does not deform, or the amount of deformation that occurs in the avoidance portion is small. This reduces the risk of the electrode tab obstructing or blocking the pressure relief mechanism, thus facilitating the pressure relief mechanism for pressure relief and enhancing the safety of the battery cell.

The battery cell disclosed in the embodiments of the present disclosure can be used in various electrical devices, comprising but not limited to vehicles, ships, or aircraft. The power system of the electrical device can be comprised of the battery cell and battery disclosed in the embodiments of the present disclosure.

The embodiments of the present disclosure provide an electric device using the battery for its power source, wherein the electrical device can comprise but is not limited to vehicles, mobile phones, portable devices, laptops, ships, spacecraft, electric toys, and power tools, among others. Vehicles can be gasoline cars, gas cars, or new energy vehicles. New energy vehicles can comprise pure electric vehicles, hybrid vehicles, or extended-range vehicles. Aerospace vehicles encompass airplanes, rockets, spaceplanes, and spacecraft, among others. Electric toys can be stationary or mobile, like video game consoles, electric car toys, electric boat toys, and electric airplane toys. Electric tools comprise metal-cutting tools, grinding tools, assembly tools, and railway electric tools, such as electric drills, angle grinders, electric wrenches, electric screwdrivers, rotary hammers, impact drills, concrete vibrators, and electric planers. The embodiments of the present disclosure do not impose any specific restrictions on the aforementioned electrical devices.

The following embodiments are explained using the example of vehicles as electrical devices for the sake of convenience.

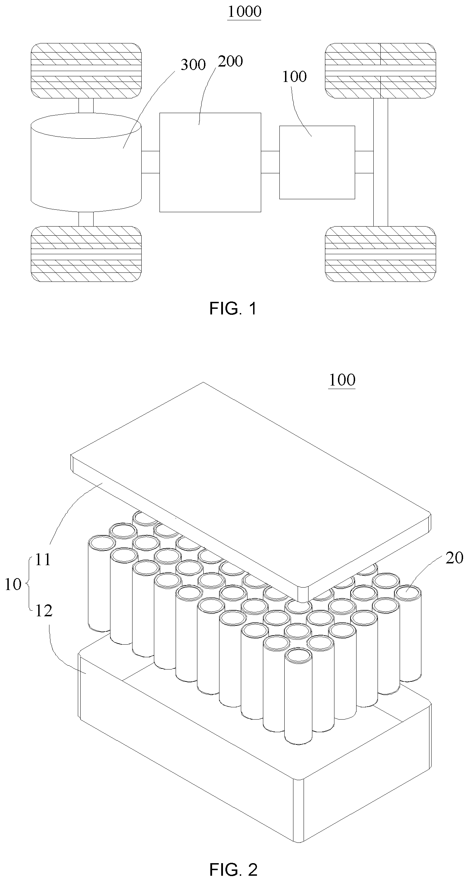

Referring to FIG. 1, FIG. 1 is a schematic diagram of a structure of a vehicle 1000 provided in some embodiments of the present disclosure. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000.

Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of a battery 100 provided in some embodiments of the present disclosure. The battery 100 comprises a box 10 and multiple battery cells 20, with the multiple battery cells 20 arranged inside the box 10.

The box 10 is a component that contains the battery cell 20, and the box 10 provides a containment space for the battery cell 20. The box 10 can have various structures. In some embodiments, the box 10 can comprise a first portion 11 and a second portion 12, wherein the first portion 11 and the second portion 12 are fitted together to define the containment space used to accommodate the battery cell 20. The first portion 11 and the second portion 12 can come in various shapes, such as rectangular, cylindrical, and so on. The first portion 11 can be an open-sided hollow structure, and the second portion 12 can also be an open-sided hollow structure. The open side of the second portion 12 can be covered by the open side of the first portion 11, thereby forming a box 10 with an accommodating space. It is also possible for the first portion 11 to be an open-sided hollow structure, and the second portion 12 to be a plate-like structure. The second portion 12 can be covered over the open side of the first portion 11, thereby forming a box 10 with an accommodating space, as well. The first portion 11 and the second portion 12 can be sealed using sealing components, wherein the sealing components can comprise sealing rings, sealing adhesive, and so on.

In the battery 100, the multiple battery cells 20 can be connected in series, parallel, or hybrid. Hybrid connection refers to having both series and parallel connections among multiple battery cells 20. The multiple battery cells 20 can be first connected in series, parallel, or hybrid to form battery modules, and then the multiple battery modules can be connected in series, parallel, or hybrid to form an overall structure, which is accommodated within the box 10. Alternatively, all battery cell 20 can be directly connected in series, parallel, or hybrid, and the entire arrangement of battery cell 20 can be accommodated within the box 10.

In some embodiments, the battery 100 can also comprise a busbar component. The multiple battery cells 20 can be electrically connected through the busbar component to achieve series, parallel, or mixed connections among the battery cells 20. The busbar component can be a metallic conductor, such as copper, iron, aluminum, stainless steel, aluminum alloy, etc.

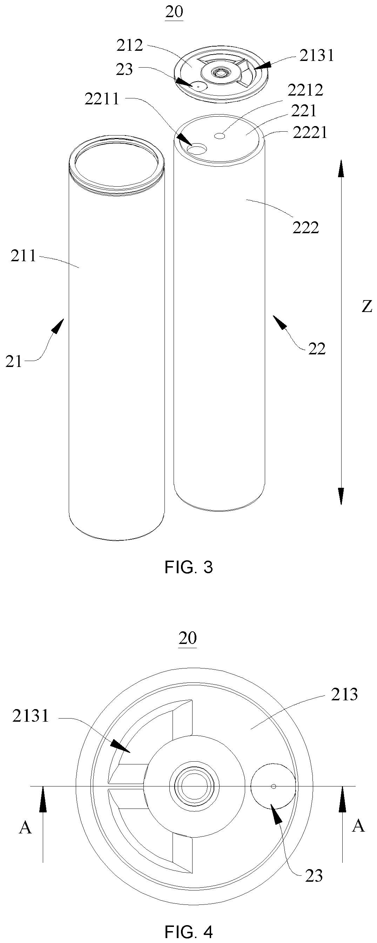

Referring to FIG. 3, FIG. 3 is an exploded view of a battery cell 20 provided in some embodiments of the present disclosure. battery cell 20 can comprise a casing 21, an electrode assembly 22, and a pressure relief mechanism 23.

The casing 21 is a component configured to accommodate the electrode assembly 22. The casing 21 can have various shapes, such as cylinder, cuboid, and so on. The casing 21 can comprise a shell 211 and a cover 212, wherein the cover 212 is closed over the opening of the casing 211. Together, the cover 212 and the shell 211 define a sealed space.

In this case, the shell 211 can be a hollow structure with an opening formed at one end, or the shell 211 can be a hollow structure with openings formed at two opposite ends. The material of the shell 211 can be diverse, such as copper, iron, aluminum, steel, aluminum alloy, and so on.

The cover 212 is a component that seals the opening of the shell 211, thereby isolating the internal environment of the battery cell 20 from the external environment. The cover 212, together with the shell 211, defines a sealed space configured to accommodate the electrode assembly 22, electrolyte, and other components. The cover 212 can be connected to the shell 211 in the manner of welding or crimping to seal the opening of the shell 211. The shape of the cover 212 can be adapted to the shape of the casing 211, for example, if the shell 211 is a cuboid structure, the cover 212 can be a rectangular plate-like structure that fits with the shell 211. Similarly, if the shell 211 is cylindrical, the cover 212 can be a circular plate-like structure that fits with the shell 211. The material of the cover 212 can also be diverse, such as copper, iron, aluminum, steel, aluminum alloy, and so on.

In the battery cell 20, there can be one or two covers 212. In embodiments where the shell 211 has an open-ended hollow structure at both ends, two covers 212 can correspondingly be arranged. The two covers 212 respectively seal the two openings of the casing 211; and together with the shell 211, the two covers 212 define the sealed space. In embodiments where the shell 211 has an open-ended hollow structure at one end, one cover 212 can correspondingly be arranged. The cover 212 seals the openings of one side of the shell 211; and together with the shell 211, the cover 212 defines the sealed space.

The electrode assembly 22 is the component within the battery cell 20 where electrochemical reactions occur. The electrode assembly 22 can comprise a positive electrode sheet, a negative electrode sheet, and a separator. The electrode assembly 22 can be in the form of a wound structure formed by winding a positive electrode sheet, a separator, and a negative electrode sheet together. The electrode assembly 22 comprises a positive electrode tab and a negative electrode tab. The positive electrode tab can refer to the portion of the positive electrode sheet that is not coated with positive electrode active material. The negative electrode tab can refer to the portion of the negative electrode sheet that is not coated with negative electrode active material.

The pressure relief mechanism 23 is a component or device within the battery cell 20 that is actuated when the internal pressure or temperature of the battery cell reaches a threshold, releasing internal pressure or temperature. The pressure relief mechanism 23 can be arranged on the cover 212 or on the shell 211.

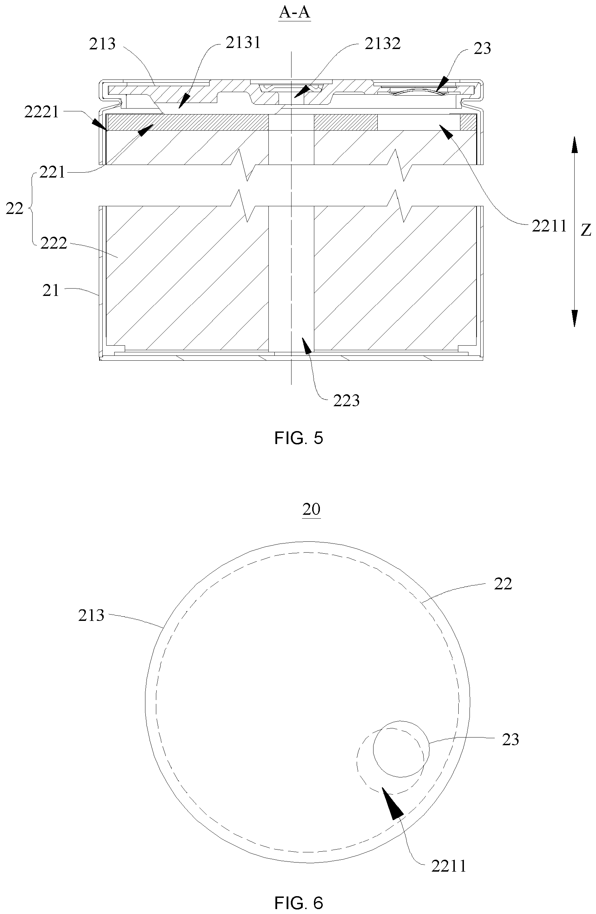

According to some embodiments of the present disclosure, referring to FIGS. 4 to 6, FIG. 4 is a top view of the battery cell 20 provided in some embodiments of the present disclosure, FIG. 5 shows a sectional view of FIG. 4 in the A-A direction, and FIG. 6 is a top view of a battery cell 20 provided in some other embodiments of the present disclosure. In FIG. 6, the projection of the pressure relief mechanism 23 on the electrode assembly 22 partially falls into the avoidance portion 2211. The embodiments of the present disclosure provide a battery cell 20, wherein the battery cell 20 comprises a casing 21, a pressure relief mechanism 23, and an electrode assembly 22. The casing 21 is provided with a first wall 213, and the pressure relief mechanism 23 is arranged on the first wall 213. The electrode assembly 22 is arranged inside the casing 21. The electrode assembly 22 comprises an electrode tab 221, and the electrode tab 221 comprises an avoidance portion 2211. Along a thickness direction Z of the first wall 213, the projection of the pressure relief mechanism 23 on the electrode assembly 22 at least partially falls within the avoidance portion 2211.

In the drawing, the direction indicated by the letter Z is the thickness direction of the first wall 213.

The first wall 213 is one of the walls forming the casing 21, and the first wall 213, along with the other walls of the casing 21, encloses a sealed chamber for accommodating the electrode assembly 22.

As shown in FIGS. 3 and 5, the electrode assembly 22 can comprise a main body 222 and an electrode tab 221 protruding from the main body 222. The electrode tab 221 protrudes from the first end face 2221 of the main body 222 is close to the first wall 213, and the first end face 2221 is perpendicular to the thickness direction Z of the first wall 213. The avoidance portion 2211 is a recessed region of the electrode tab 221, meaning that in the avoidance portion 2211, the main body 222 does not extend out of the electrode tab 221. Alternatively, the avoidance portion 2211 can also be a region of the electrode tab 221 that protrudes from the first end face 2221 but has a lower height. The height of this region protruding from the first end face 2221 is lower than that of the other regions of the electrode tab 221 protruding from the first end face 2221, in other words, the distance from the avoidance portion 2211 to the first wall 213 is greater than the distance from other regions of the electrode tabs 221 to the first wall 213. The electrode assembly 22 is primarily formed by winding positive electrode sheet and negative electrode sheet, and typically, there is a separator arranged between the positive electrode sheet and negative electrode sheet. The separator is configured to separate the positive electrode sheet and positive electrode sheet, thus preventing internal short circuits between the positive electrode sheet and positive electrode sheet. The portions of the positive electrode sheet and negative electrode sheet that contain the active material form the main body 222, while the portions of the positive electrode sheet and negative electrode sheet that do not contain the active material each constitute the electrode tab 221. The electrode tab 221 protrudes from the main body 222.

For example, when the electrode tab 221 is in a flattened structure, the avoidance portion 2211 can be a region of the flattened electrode tab 221 with a locally lower height. During thermal runaway of the battery cell 20, the gas inside the battery cell 20 acts on the electrode tab 221, causing the electrode tab 221 to transition from a flattened state to an upright state. Because the avoidance portion 2211 has a lower height protruding from the first end face 2221, the avoidance portion 2211 does not obstruct the pressure relief mechanism 23, thereby allowing gas to be discharged through the avoidance portion 2211 from the pressure relief mechanism 23. The flattened structure refers to the structural form of the electrode tab after they have been flattened. Flattening the electrode tabs 221 is a process in which the upright electrode tabs 221 are pressed down, causing them to come into contact with each other. After flattening, the electrode tabs 221 are more closely packed, facilitating their connection to the first wall 213 and improving their current collection function.

Along the thickness direction Z of the first wall 213, the projection of the pressure relief mechanism 23 on the electrode assembly 22 partially falls within the avoidance portion 2211, thus creating a significant overlap area between the pressure relief mechanism 23 and the avoidance portion 2211.

In the battery cell 20 according to the embodiments of the present disclosure, the electrode tab 221 is provided with an avoidance portion 2211. The avoidance portion 2211 can either be a recessed region of the electrode tab 221 or a region of the electrode tab 221 with a locally lower height, thus enabling the avoidance portion 2211 to have a deflecting function. Since the projection of the pressure relief mechanism 23 on the electrode assembly 22 at least partially falls within the avoidance portion 2211. That is to say, there is a significant overlap region between the pressure relief mechanism 23 and the avoidance portion 2211. During thermal runaway of the battery cell 20, the avoidance portion 2211 does not deform, or, the amount of deformation that occurs in the avoidance portion 2211 is small. This reduces the risk of the electrode tab 221 obstructing or blocking the pressure relief mechanism 23. There is always a pathway for gas release between the electrode tab 221 and the pressure relief mechanism 23, thus facilitating the pressure relief mechanism 23 for pressure relief and enhancing the safety of the battery cell 20.

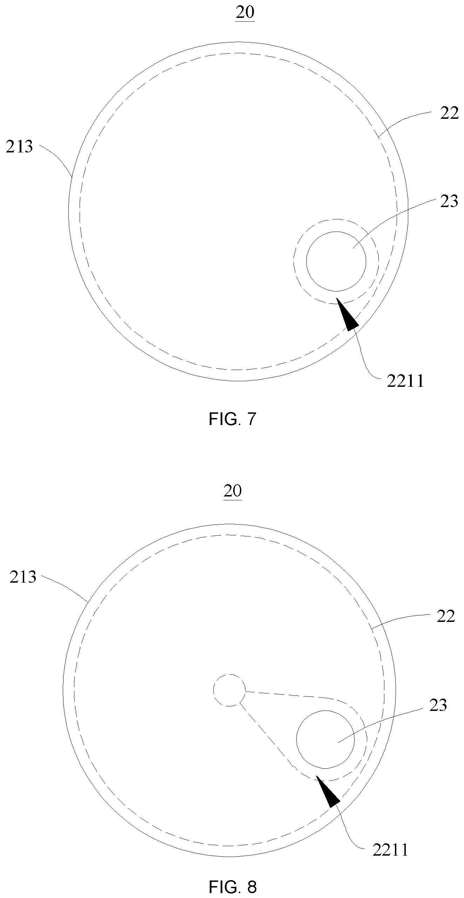

Referring to FIG. 7 and FIG. 8, FIG. 7 is a top view of the battery cell 20 provided in some other embodiments of the present disclosure; FIG. 8 is a top view of the battery cell 20 provided in some other embodiments of the present disclosure.

According to some embodiments of the present disclosure, along the thickness direction Z, the projection of the pressure relief mechanism 23 on the electrode assembly 22 falls entirely within the avoidance portion 2211, and the area of the avoidance portion 2211 is greater than or equal to the area of the pressure relief mechanism 23.

The area of the avoidance portion 2211 refers to the area of the avoidance portion 2211 in a plane perpendicular to the thickness direction Z.

The area of the pressure relief mechanism 23 refers to the area of the projection of the pressure relief mechanism 23 on the electrode assembly 22 along the thickness direction Z. Alternatively, the area of the pressure relief mechanism 23 can also be the area of the hole(s) opened on the first wall 213 for arranging the pressure relief mechanism 23.

When the area of the avoidance portion 2211 is equal to the area of the pressure relief mechanism 23, and the entire projection of the pressure relief mechanism 23 on the electrode assembly 22 falls within the avoidance portion 2211, the contours of the avoidance portion 2211 match the contours of the pressure relief mechanism 23. As shown in FIGS. 7 and 8, when the area of the avoidance portion 2211 is greater than the area of the pressure relief mechanism 23, and the entire projection of the pressure relief mechanism 23 on the electrode assembly 22 falls within the avoidance portion 2211, the avoidance portion 2211 and the projection of the pressure relief mechanism 23 have the maximum overlap area. When the battery cell 20 experiences thermal runaway, there is a lower risk of the pressure relief mechanism 23 being obstructed or blocked by the electrode tabs 221. Gas from the inside of the battery cell 20 can flow smoothly towards the pressure relief mechanism 23 through the avoidance portion 2211.

In the above solution, the projection of the pressure relief mechanism 23 on the electrode assembly 22 falls entirely within the avoidance portion 2211, and the area of the avoidance portion 2211 is greater than or equal to the area of the pressure relief mechanism 23. Therefore, it is effective in reducing the risk of the electrode tab 221 obstructing the pressure relief mechanism 23 during thermal runaway of the battery cell 20, thus ensuring pressure relief by the pressure relief mechanism 23 timely.

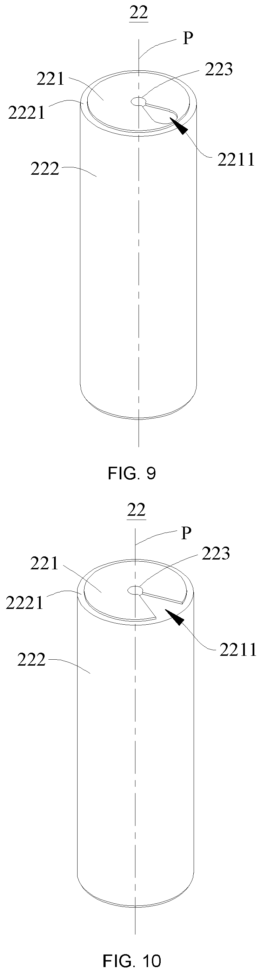

Referring to FIGS. 9 and 10, FIG. 9 is a three-dimensional view of an electrode assembly 22 provided in some embodiments of the present disclosure, and FIG. 10 is a three-dimensional view of the electrode assembly 22 provided in some other embodiments of the present disclosure. According to some embodiments of the present disclosure, the electrode assembly 22 is provided with a central hole 223, and the avoidance portion 2211 is communicated with the central hole 223.

Optionally, the electrode assembly 22 can have a wound structure, wherein the electrode assembly 22 comprises a main body 222 and an electrode tab 221 protruding from the main body 222. The electrode tab 221 protrudes from the first end face 2221 of the main body 222, which is located near the first wall 213. The main body 222 is of a cylindrical shape, which can be circular or prismatic (such as triangular or hexagonal). In some embodiments, the main body 222 is cylindrical.

The central hole 223 can be a hole formed when the main body 222 of the electrode assembly 22 is wound around the winding pin and the winding pin is withdrawn. The arrangement of the central hole 223 facilitates the formation of the electrode assembly 22, the release of gas, and the infiltration of electrolyte into the electrode assembly 22.

The avoidance portion 2211 is communicated with the central hole 223, and the gas at the central hole 223 can exchange gases with the gas at the avoidance portion 2211. When the battery cell 20 experiences thermal runaway, the gas inside the battery cell 20 can flow from the central hole 223 towards the avoidance portion 2211, and then be discharged from the pressure relief mechanism 23. The smooth flow of gas within the battery cell 20 is improved, thereby facilitating the operation of the pressure relief mechanism 23 during pressure release.

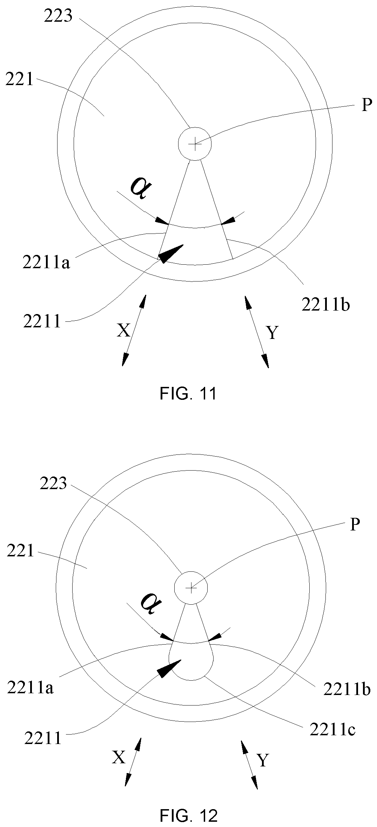

As shown in FIG. 11, FIG. 11 shows a top view of the electrode assembly 22 in some embodiments of the present disclosure. According to some embodiments of the present disclosure, the avoidance portion 2211 comprises a first edge 2211a and a second edge 2211b. The first edge 2211a extends along the first direction X from the hole wall of the central hole 223, while the second edge 2211b extends along the second direction Y from the hole wall of the central hole 223. The distance between the first edge 2211a and the second edge 2211b gradually increases from one end near the axis P of the central hole 223 to the other end away from the axis P of the central hole 223.

The extension direction of the axis P of the central hole 223 can be parallel to the thickness direction Z of the first wall 213.

The first edge 2211a generally extends along the first direction X. For example, the extension path of the first edge 2211a can be in a straight-line form or a curved form.

The second edge 2211b generally extends along the second direction Y. For example, the extension path of the second edge 2211b can be in a straight-line form or a curved form.

The first direction X and the second direction Y can both intersect with the axis P of the central hole 223. For instance, the first direction X and the second direction Y can be both perpendicular to the axis P of the central hole 223, or the first direction X and the second direction Y can be inclined with respect to the axis P of the central hole 223. For example, along the first direction X from the hole wall of the central hole 223 towards the direction away from the axis P of the central hole 223, the distance between the first edge 2211a and the first wall 213 can gradually increase or decrease. Correspondingly, the distance between the second edge 2211b and the first wall 213 can also gradually increase or decrease.

In some embodiments, the first direction X and the second direction Y may not necessarily pass through the axis P of the central hole 223. In this case, the first edge 2211a gradually approaches the second edge 2211b by the hole wall of the central hole 223 along the first direction X in a direction away from the axis P of the central hole 223.

In the above scheme, the distance between the first edge 2211a and the second edge 2211b gradually increases from one end near the axis P of the central hole 223 to the other end away from the axis of the central hole 223, thus facilitating smooth flow of gas from the central hole 223 of the electrode assembly 22 towards the avoidance portion 2211 and enabling the discharge of gas from the pressure relief mechanism 23 at the proper time. Especially when the pressure relief mechanism 23 is arranged away from the central hole 223, along the thickness direction Z, the projection of the pressure relief mechanism 23 on the electrode assembly 22 does not overlap with the central hole 223. The structural form of the avoidance portion 2211 can be advantageous for the gas at the central hole 223 of the electrode assembly 22 to flow smoothly toward the pressure relief mechanism 23.

According to some embodiments of the present disclosure, as shown in FIGS. 10 and 11, both the first edge 2211a and the second edge 2211b extend to the outer edge of the electrode tab 221.

The outer edge of the electrode tab 221 refers to the edge of the electrode tab 221 that is far from the axis P of the central hole 223.

Both the first edge 2211a and the second edge 2211b extend to the outer edge of the electrode tab 221, allowing the avoidance portion 2211 to communicate the central hole 223 and the outer edge of the electrode tab 221. Therefore, a channel for the gas flow is formed at the avoidance portion 2211 of the electrode tab 221, which enables smooth flow of gas from the internal gas of the battery cell 20 towards the pressure relief mechanism 23.

As shown in FIG. 12, FIG. 12 shows a top view of the electrode assembly 22 provided in other some embodiments of the present disclosure. According to some embodiments of the present disclosure, the avoidance portion 2211 also comprises a third edge 2211c. One end of the first edge 2211a, away from the axis P of the central hole 223, is connected to one end of the second edge 2211b, away from the axis P of the central hole 223, through the third edge 2211c. The third edge 2211c forms an arched shape in the direction away from the axis P of the central hole 223.

The third edge 2211c is an edge of the avoidance portion 221 that connects the first edge 2211a and the second edge 2211b. The third edge 2211c is located at one end of the first edge 2211a and the second edge 2211b, away from the axis P of the central hole 223.

The third edge 2211c can be arc-shaped, with the center of the arc located on one side of the third edge 2211c, near the axis P of central hole 223.

In the above solution, the third edge 2211c connects the first edge 2211a and the second edge 2211b, which helps constrain the flow path of gas within the avoidance portion 2211. This arrangement ensures that when the battery cell 20 experiences thermal runaway, the internal gas of the battery cell 20 flows through the avoidance portion 2211 towards the pressure relief mechanism 23.

According to some embodiments of the present disclosure, the third edge 2211c is tangent to both the first edge 2211a and the second edge 2211b.

In the above solution, the third edge 2211c is tangent to both the first edge 2211a and the second edge 2211b, thus facilitating a smooth transition between the first edge 2211a and the second edge 2211b with the third edge 2211c. This reduces resistance when gas flows within the avoidance portion, thereby ensuring smooth gas flow.

According to some embodiments of the present disclosure, as shown in FIGS. 11 and 12, the angle between the first edge 2211a and the second edge 2211b is α, which satisfies the range of 10°≤α≤70°. For example, the angle α can be 10°, 20°, 30°, 40°, 50°, 60°, 70°, and so on.

Preferably, 20°≤α≤60°. For instance, the angle α can be 20°, 30°, 40°, 50°, 60°, and so on.

Preferably, 30°≤α≤50°. For instance, the angle α can be 30°, 35°, 40°, 45°, 50°, and so on.

The angle α between the first edge 2211a and the second edge 2211b satisfies the aforementioned range. On one hand, it increases the area of the avoidance portion 2211, reducing the risk of the pressure relief mechanism 23 being obstructed by the electrode tab 221. On the other hand, it facilitates the flow of gas from the central hole 223 towards the pressure relief mechanism 23, improving the smoothness of gas flow. If the angle α between the first edge 2211a and the second edge 2211b is too small, the area of the avoidance portion 2211 becomes smaller, and the overlap region between the projection of the relief mechanism 23 on the electrode assembly 22 and the avoidance portion 2211 becomes smaller as well. In such a case, when the battery cell 20 experiences thermal runaway, the pressure relief mechanism 23 is more likely to be obstructed or blocked by the electrode tab 221. If the angle α between the first edge 2211a and the second edge 2211b is too large, the contact area of the electrode tab 221 configured for connecting to other components (such as the first wall 213) becomes smaller, which can affect the conductivity of the electrode tab 221.

According to some embodiments of the present disclosure, the avoidance portion 2211 can be circular. When the avoidance portion 2211 is circular, the center of the avoidance portion 2211 can be aligned with the axis P of the central hole 223 or the center of the avoidance portion 2211 can be offset from the central hole 223.

It should be noted that the arrangement of the avoidance portion 2211 in any of the embodiments corresponds to the pressure relief mechanism 23 to ensure that the pressure relief mechanism 23, along the thickness direction Z, at least partially projects onto the avoidance portion 2211 on the electrode assembly 22.

According to some embodiments of the present disclosure, the electrode tab 221 is connected to the first wall 213.

The electrode tab 221 is connected to the first wall 213 to facilitate the export of electrical energy from the electrode assembly 22 by the first wall 213. There can be various ways to connect the tab 221 to the first wall 213. The electrode tab 221 can be welded to the first wall 213, or it can be bonded to the first wall 213 with conductive glue. Optionally, the electrode tab 221 is welded to the first wall 213 to ensure a stable connection between the electrode tab 221 and the first wall 213.

In the above solution, connecting the electrode tab 221 to the first wall 213 reduces the need for additional connecting components, thus increasing the spatial efficiency of the electrode assembly 22 and allowing the battery cell 20 to have a higher energy density.

According to some embodiments of the present disclosure, as shown in FIGS. 3 to 5, the first wall 213 comprises a connection region 2131, wherein the connection region 2131 forms a protrusion on the side of the first wall 213 facing the electrode assembly 22, and the protrusion is connected to the electrode tab 221.

The connection region 2131 is the region of the first wall 213 configured to connect with the electrode tab 221, and the protrusion is a structural form of the connection region 2131 on the side of the first wall 213 facing the electrode assembly 22. The protrusion protrudes towards the side of the first wall 213 facing the electrode assembly 22 and is closer to the tab 221 compared to other regions of the first wall 213. The protrusion can abut against the electrode tab 221 to limit the movement of the electrode assembly 22 in the thickness direction Z of the first wall 213.

In the above solution, connecting the protrusion to the electrode tab 221 allows for the fixation of the electrode assembly 22, thus reducing the risk of the electrode assembly 22 moving within the casing 21.

According to some embodiments of the present disclosure, shown in FIGS. 3 and 4, the connection region 2131 forms a recess on the side of the first wall 213 that is away from the electrode assembly 22.

The recess is a structural form of the connection region 2131 on the side of the first wall 213 facing away from the electrode assembly 22. In other words, the recess is arranged in correspondence to the protrusion. The thickness of the connection region 2131 can be the same as the thickness of other regions of the first wall 213. For example, the first wall 213 can be formed by stamping to create the connection region 2131, or the first wall 213 can be cast to achieve the formation of the connection area 2131.

In the above solution, having the connection region 2131 form a recess on the side of the first wall 213 away from the electrode assembly 22 facilitates the molding of the connection region 2131 and reduces the weight of the casing 21.

According to some embodiments of the present disclosure, the electrode tab is of a flattened structure. The flattened structure refers to the structural form of the electrode tab after they have been flattened. Flattening the electrode tabs is a process in which the upright electrode tabs 221 are pressed down, causing them to come into contact with each other. After flattening, the electrode tabs 221 are more closely packed, facilitating their connection to the first wall 213 and improving their current collection function.

According to some embodiments of the present disclosure, as shown in FIG. 3, the casing 21 comprises a shell 211 and a cover 212, wherein the shell 211 is provided with an opening, the cover 212 seals the opening, and the cover 212 is the first wall 213.

The shell 211 is a hollow structure with one end opening, and the cover 212 seals the opening to form a sealed space with the shell 211.

The cover 212 is the first wall 213, and the pressure relief mechanism 23 is arranged on the cover 212, which simplifies the structure and facilitates the arrangement of the pressure relief mechanism 23.

According to some embodiments of the present disclosure, as shown in FIG. 5, the battery cell 20 also comprises an injection hole 2132, wherein the injection hole 2132 is arranged in the first wall 213. Along the thickness direction Z, the projection of the injection hole 2132 on the electrode assembly 22 at least partially falls into the central hole 223. The positioning of the injection hole 2132 is designed to facilitate the rapid infiltration of the electrolyte into the electrode assembly 22.

According to some embodiments of the present disclosure, the present disclosure further provides a battery, which comprises a box 10 and multiple battery cells 20 provided in any embodiment described above. The multiple battery cell 20 is arranged in the box 10.

According to some embodiments of the present disclosure, the present disclosure further provides an electrical device, which comprises the electrical device 20 provided by any of the embodiments as described above. The battery cell 20 is configured to supply electric energy to the electrical device.

According to some embodiments of the present disclosure, as shown in FIG. 3, the present disclosure provides a cylindrical battery cell, comprising a casing 21, a pressure relief mechanism 23, and an electrode assembly 22. The casing 21 comprises a casing 211 and a cover 212, wherein the shell 211 is provided with an opening, and the cover 212 seals the opening. The pressure relief mechanism 23 is arranged on the cover 212. The electrode assembly 22 comprises a main body 222 and an electrode tab 221 protruding from the main body 222. The electrode tab 221 protrudes from the first end face 2221 of the main body 222 which is close to the cover 212. The electrode tab 221 is of a flattened structure and comprises an avoidance portion 2211, wherein the avoidance portion 2211 is a recessed region of the electrode tab 221. As shown in FIG. 7, along the thickness direction Z of the cover 212, the projection of the pressure relief mechanism 23 on the electrode assembly 22 falls entirely within the avoidance portion 2211, and the area of the avoidance portion 2211 is greater than the area of the pressure relief mechanism 23.

In such cylindrical battery cells, the pressure relief mechanism 23 and the avoidance portion 2211 have a corresponding overlap region that is relatively large. In the case of a thermal runaway, even if the electrode tab 221 undergoes deformation (changing from a flattened state to an upright state), it won't completely block the pressure relief mechanism 23. This allows the internal gas to flow smoothly towards the pressure relief mechanism 23, thus facilitating the pressure relief mechanism 23 for pressure release and enhancing the safety of the cylindrical battery cell.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but comprises all technical solutions falling within the scope of the claims.

## Claims

1. A battery cell, comprising
a casing, having a first wall;
a pressure relief mechanism, arranged on the first wall;
an electrode assembly, arranged inside the casing, wherein the electrode assembly comprises an electrode tab, and the electrode tab comprises an avoidance portion, wherein
along a thickness direction of the first wall, a projection of the pressure relief mechanism on the electrode assembly at least partially falls within the avoidance portion.

2. The battery cell according to claim 1, wherein, along the thickness direction, the projection of the pressure relief mechanism on the electrode assembly falls entirely within the avoidance portion, and an area of the avoidance portion is greater than or equal to an area of the pressure relief mechanism.

3. The battery cell according to claim 1 or 2, wherein the electrode assembly is provided with a central hole, and the avoidance portion is communicated with the central hole.

4. The battery cell according to claim 3, the avoidance portion comprises a first edge and a second edge; the first edge extends along a first direction from a hole wall of the central hole, and the second edge extends along a second direction from the hole wall of the central hole; and a distance between the first edge and the second edge gradually increases from one end near an axis of the central hole to the other end away from the axis of the central hole.

5. The battery cell according to claim 4, wherein both the first edge and the second edge extend to an outer edge of the electrode tab.

6. The battery cell according to claim 4, wherein the avoidance portion further comprises a third edge; one end of the first edge, away from the axis of the central hole, is connected to one end of the second edge, away from the axis of the central hole, through the third edge; and the third edge forms an arched shape in a direction away from the axis of the central hole.

7. The battery cell according to claim 6, wherein the third edge is tangent to both the first edge and the second edge.

8. The battery cell according to any one of claims 4 to 7, wherein an angle between the first edge and the second edge is α, satisfying 10°≤α≤70°, preferably, 20°≤α≤60°, and preferably, 30°≤α≤50°.

9. The battery cell according to any one of claims 1 to 8, wherein the electrode tab is connected to the first wall.

10. The battery cell according to claim 9, wherein the first wall comprises a connection region; in the connection region, a protrusion is formed on a side of the first wall facing the electrode assembly, and the protrusion is connected to the electrode tab; on a side of the first wall facing away from the electrode assembly, a recess is formed in the connection region.

11. The battery cell according to claim 10, wherein the electrode tab is of a flattened structure.

12. The battery cell according to any one of claims 1 to 11, wherein the casing comprises a shell and a cover; the shell is provided with an opening; the cover seals the opening; and the cover is the first wall.

13. A battery, comprising a box and multiple battery cells according to any one of claims 1 to 12, wherein the multiple battery cells are arranged inside the box.

14. An electrical device, comprising the battery cell according to any one of claims 1 to 12.
